Europäisches Patentamt

European Patent Office

Office européen des brevets

(19)

(11) Publication number: **0 157 956**
**A1**

(12) **EUROPEAN PATENT APPLICATION**

(21) Application number: **84301998.5**

(22) Date of filing: **26.03.84**

(51) Int. Cl.⁴: **B 29 C 35/02**
**B 29 C 35/10, B 29 D 23/22**
**//B29K21/00, B29L23/22**

(43) Date of publication of application:
**16.10.85 Bulletin 85/42**

(84) Designated Contracting States:
**DE FR GB IT NL**

(71) Applicant: **MATHER & PLATT LIMITED**
**Park Works**
**Manchester, M10 6BA(GB)**

(72) Inventor: **Duke, David Arthur Balmanno**
**9 Pinfold**
**Langton Preston PR4 5AE(GB)**

(74) Representative: **Massey, Alexander et al,**
**MARKS & CLERK Scottish Life House Bridge Street**
**Manchester, M3 3DP(GB)**

(54) A method of producing rubber-covered hose.

(57) Rubber-covered hose is produced by extruding a rubber compound around an inflated vulcanised rubber-lined textile (10, 11) jacket to the exterior of which has been applied a pre-coat of bonding agent. The covering of rubber compound is cured continuously by passing it through a multi-zoned shortwave infra-red radiation curing oven (26) consisting of an initial zone for raising the hose temperature to a temperature above the extruder exit temperature and at least one other zone in which actual curing of the rubber compound is effected.

EP 0 157 956 A1

./...

Croydon Printing Company Ltd

FIG. 2

1.

## A METHOD OF PRODUCING RUBBER-COVERED HOSE

This invention relates to a method of producing rubber-covered hose.

The term "rubber" used herein and in the claims is to be construed as embracing natural and synthetic rubbers.

It is an object of the present invention to provide a continuous method of producing rubber-covered hose, especially fire hose, in substantial lengths, for example 1000 metres or more, with high rates of production.

According to the present invention there is provided a method of continuously producing rubber-covered hose, comprising the steps of extruding a rubber compound around an internally pressurised, lined textile hose jacket and thereafter curing the rubber compound by a heating process employing a plurality of adjustable, controllable and increasing temperature heating zones.

Preferably, the heating process is an infra-red electric heating or a dielectric heating process.

The heating process may alternatively be a hot gas heating process, a steam heating process or a fluidised bed heating process.

The characteristics of the heating process are (a) it is multi-zoned (two or more); (b) there is at least one and preferably at least two downstream temperature increases in terms of hose movement through the heating zones; (c) the temperatures are adjustable and controllable.

Preferably, the infra-red heating process, if employed, is a short-wave electric, infra-red radiation process.

Preferably, the infra-red radiation process consists of at least four zones, the first of which serves to raise the hose temperature to a predetermined temperature above the extruder exit temperature while the subsequent zones are curing zones each at a predetermined temperature.

Preferably, the second heating zone is the main or master curing zone in that the major curing of the rubber compound commences in this zone, the third and fourth heating zones serving to complete final curing of the rubber compound.

The method according to the present invention includes the step of controlling the curing of the rubber compound by monitoring the temperature in each zone and automatically adjusting same if and when required.

Preferably, the textile hose jacket is lined with rubber, thermoplastic polymer or any other conventional medium used to line hoses, and the lining is, prior to being presented to rubber extruder, coated externally with a bonding agent and vulcanised.

0157956

A pre-heat unit may be disposed between the vulcanisation stage and the rubber extruder and immediately before the rubber extruder to elevate the hose temperature to the correct extruder entry temperature should this be necessary.

The rubber-coated hose may be treated, if necessary, for example by a water spray (with or without zinc stearate dispersed therein) prior to being wound on a take-up reel to render the surface of the rubber coating non-stick and also to assist cooling of the hose.

In the production of rubber-covered hose it is known that water vapour occurs in the textile ·jacket, and also that the adhesive which bonds the lining to the jacket may give off volatiles during the vulcanisation process, with consequent adverse effects on the bonding of the outer rubber cover to the textile jacket and also a likelihood of blistering of the former during the curing process.

Hitherto, the usual method of overcoming this problem has been to pinhole the rubber coating prior to curing but this has the disadvantage that if these pinholes are left unsealed the rubber cover is permeable to external liquids, and if they are sealed, experience has shown that such sealing may rapidly wear off in service again rendering the rubber coat permeable to external liquids.

It is a feature of the method of this invention to remove this water vapour and volatiles by subjecting the lined-textile jacket, prior to the application of the bonding agent, to a heating step at a temperature sufficient to remove the water vapour and to activate the adhesive to allow the volatiles to be removed by extraction.

The textile jacket may additionally be pre-dried in a controlled conditioning atmosphere prior to this heating step.

The present invention also includes apparatus for carrying out the method of the present invention and including, inter alia a rubber extruder followed by a multi-zone curing oven. Preferably, the oven is a short-wave electric radiation or dielectric curing oven.

Preferably the temperatures of the zones are automatically controlled by a thyristor system responsive to emission pyrometers continuously monitoring the surface temperature of the hose in the oven zones.

An embodiment of the present invention will now be described, by way of example, with reference to the accompanying drawings, in which :-

Fig. 1 is a simple flow diagram of the process according to the invention; and

Fig. 2 is a diagrammatic view of a production line for producing rubber-covered hose according to the invention.

0157956

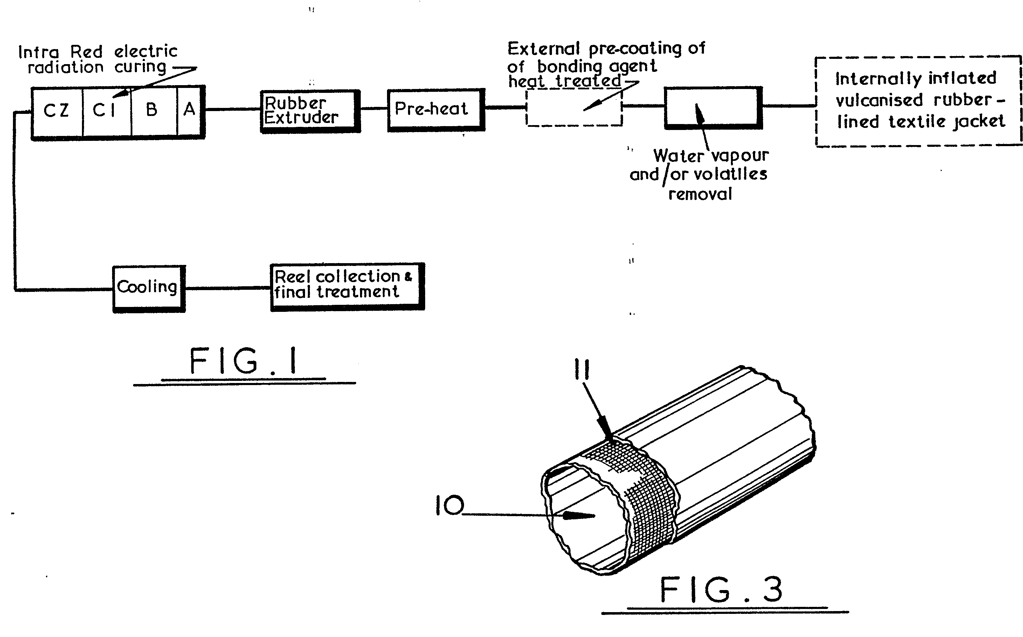

Referring to Fig. 1, the process involves producing a continuous length of internally-inflated vulcanised rubber-lined textile jacket with an external pre-coat of heat treated bonding agent to a rubber extruder, after passage through a pre-heater if necessary, i.e. if the lined jacket temperature falls below a temperature level acceptable to the rubber extruder.

A rubber compound is extruded around the pre-coated lined textile jacket and is fed into a multi-zoned infra-red electric radiation curing oven. Zone A elevates temperature of uncured rubber coating from extruder exit temperature to a temperature commensurate with commencement of curing; zone B elevates the temperature of the rubber cover to the correct curing temperature and it is in this zone that the major curing is commenced; zones C1 and C2 maintain the cured rubber coating at a temperature level in excess of zone B to complete the curing of the rubber cover.

If necessary, the hose constituted by a cured rubber-coated, rubber-lined textile jacket can be sprayed with liquid mainly to mitigate any tackiness but also to cool same. Thereafter, the finished hose is wound on a collection reel, deflated, and cut into measured lengths whereafter the customary end fittings (nozzle and supply coupling) are attached and the completed fire hoses wound on their individual reels.

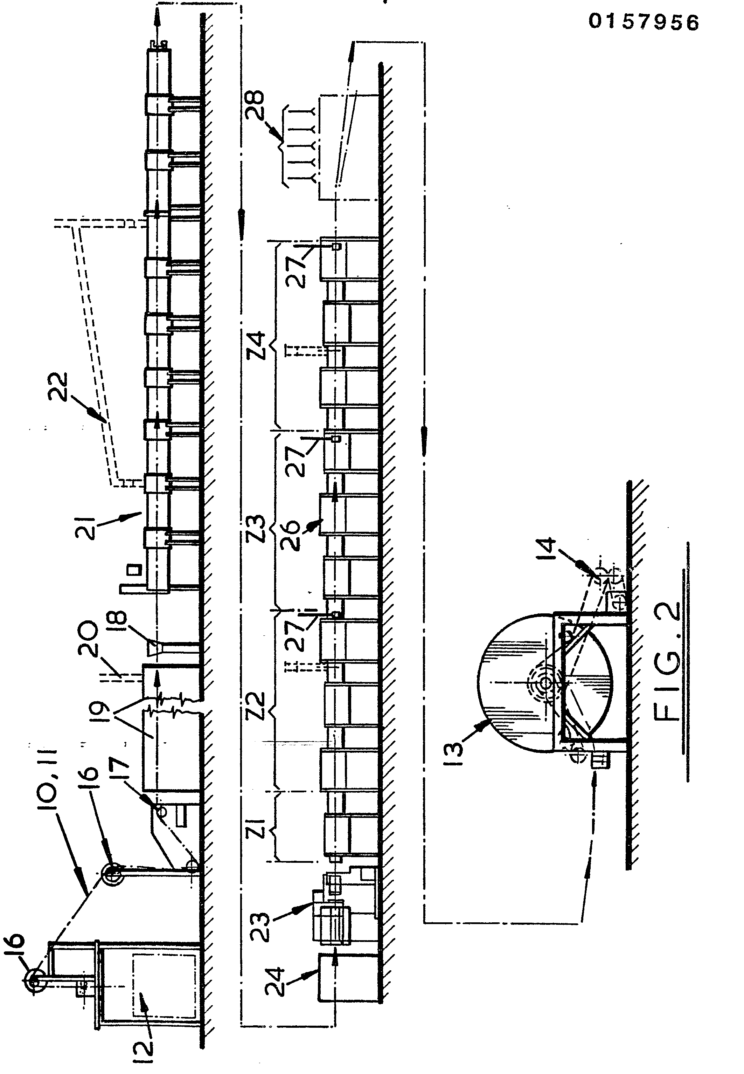

Reference is now made to the production line of Fig. 2.

The first part of the process (not shown) comprises producing a rubber lined textile jacket. This is produced, as is well known to those skilled in the art, by weaving the textile jacket on a circular loom around the rubber lining tube which passes through the centre of the loom. This rubber lining tube is coated with a dry heat-activatable neoprene adhesive. At this stage the rubber lining tube and surrounding textile jacket are not attached.

The rubber lining tube 10 is, for example, a pre-extruded vulcanised EPDM rubber tube.

The textile jacket 11 is, as aforesaid, of woven construction with, for example, a warp constituted by polyester filament with a rubber receptive finish and a weft constituted by standard polyester filament.

The rubber-lined textile jacket 10, 11 is then, after visual inspection, laid, deflated, in a receptacle (large open-topped box) 12 at the beginning of the production line and is threaded through the latter to a collection reel 13.

The movement of the rubber-lined textile jacket 10, 11 through the production line is

7.

controlled by a variable speed motor generally indicated at 14 connected to the collection reel 13 to provide a constant linear speed of movement of the hose.  The reel 13 has a hose-laying transverse guide (not shown).

The flat rubber-lined textile jacket 10, 11 passes vertically upwards from the receptacle 12 and then down over a roller guide system 16 subsequent to which it is in an inflated condition.

A variable-speed roller feed arrangement diagrammatically indicated at 17 controls the variable speed motor 14, which through the intermediary of the collection reel 13 pulls the inflated assembly 10, 11 to and through a bonding coat applicator 18.  The latter applies to the jacket exterior, for example, a solvent-based elastomeric polyurethane bonding coat cross-linkable with isocynate.  This coat is applied, for example, by a dip application process.

As it is necessary to remove water vapour from the textile jacket and/or volatiles arising from the dry neoprene adhesive on the internal lining when the latter is heated this can readily be done according to the present invention, by interposing a heating stage generally indicated at 19 between the roller feed arrangement 17 and the bonding coat applicator 18.  This will

0157956

dry off any water vapour and activate the neoprene adhesive sufficiently for the latter to disperse any volatiles from the latter. This heating stage 19 will have an extraction or exhaust arrangement 20 connected thereto. This heating stage 19, while not shown as such, is substantially the same length as the following oven 21.

This step ensures, as aforesaid, subsequent satisfactory bonding of the rubber cover to the textile jacket 11 and avoidance of blistering of the rubber cover.

The pre-coated rubber-lined textile jacket is now, in accordance with the known process, passed through a long-wave infra-red electrically heated oven 21 at, for example, 4 metres per minute, so that at the exit end of this oven it has a surface temperature in the region of 165°C, such temperature having been maintained in the lining jacket assembly 10, 11 as nearly as possible during passage through the oven.

The combined effect of internal air pressure and temperature activates the neoprene adhesive causing the rubber lining tube 10 to become fully bonded to the interior of the textile jacket. At the same time the solvent in the bonding coat on the textile jacket exterior is completely evaporated.

This oven 21 also has an exhaust or extraction system indicated at 22.

The following description is concerned with the rubber coating process according to the invention, which invention includes the aforesaid water vapour and/or volatiles removal or dispersal step.

Between the oven 21 and the rubber extruder 23 it may be necessary to provide a pre-heater 24. Its presence is dictated by the physical proximity of the extruder 23 to the exit end of oven 21, and consequently the proximity of the surface temperature of the vulcanised lining jacket assembly as it leaves the oven 21 to the temperature within the head of the extruder 23.

If the pre-heater 24 is to be provided it consists, for example of a short-wave infra-red electrically heated oven with maximum heat output of 9.0 kw automatically controlled through a thyristor by a thermo-couple maintained in contact with the hose surface immediately before it passed into the extruder cross-head.

The coating of rubber compound applied by the extruder 23 to the textile jacket will preferably provide the qualities called for by paragraph 3 of British Standard 6391:1983.

The inflated lining jacket assembly is drawn through the cross-head die of the rubber extruder 23, which is of conventional construction, to form a covering of rubber compound of predetermined thickness around the periphery of the jacket. The die is fitted with a vacuum extractor pump to ensure that the rubber is brought into intimate contact with the polyurethane pre-coat on the textile jacket and is bonded under atmospheric pressure acting on the outside of the rubber compound coating as it is withdrawn from the die.

The temperature of the die-head is maintained at 85°C and the hose jacket drawn through it at a linear speed of 4 metres per minute for example.

A particularly useful rubber is a polyvinylchloride/nitrile rubber having a quick curing system which has an adequate margin of safety to eliminate risk of scorching in the extruder. The rubber should also preferably have a relatively low plasticiser content to avoid blistering of the rubber coating during curing. A preferred rubber formulation will be one that will provide performance characteristics of excellent abrasion resistance, heat resistance and coating adhesion in the finished hose.

More specifically, but merely by way of example, a suitable formulation of the rubber compound is 100 parts by weight of a blend of 30% PVC with 70% Nitrile Rubber, to which 20 p.b.w. of plasticiser, 55 p.b.w. of fillers and 30 p.b.w of suitable desiccant, accelerators and activators, curing agent, anti-oxidant, stabiliser and pigment had been added.

The hose now with its external rubber covering 25 still uncured is now fed through a multi-zoned curing oven 26 electrically heated by short wave infra-red radiation.  The oven 26 has four zones Z1 to Z4 controlled and operated as follows :-

<u>Zone 1</u> <u>Initial heating section</u>, 1.5 m long, which raises input temperature of hose of about 80°C, to 110°C at the exit from the zone. This section is operated at a constant output of 6.75 kw, without variable control.

<u>Zone 2</u> <u>Master curing section</u>, 4.5 m long directly connected to zone Z1, with 20.25 kw maximum output.  The hose surface temperature at the exit end is continuously monitored by an emission pyrometer 27 feeding signals to a thyristor controller which adjusts energy supply, to maintain hose exit temperature at pre-set level of 140°C ± 3°C.

<u>Zones</u> <u>Subsidiary curing sections</u>, each directly <u>3 & 4</u> connected to preceding zone, and each 4.5 m long with 20.25 kw maximum heat output.  Each is provided with a manual control which adjusted the energy input to a proportion above or below that being supplied to zone Z2 by the automatic control described above.  These manual controls were adjusted to maintain a hose surface temperature of between 150°C and 155°C at the point of final exit from zone Z3, at which time the rubber coating was fully cured.

The actual settings of the manual controls necessary to maintain the correct final exit temperature vary from time to time, depending on ambient atmospheric temperature and general climatic conditions.

Zones Z3 and Z4 can alternatively be fitted with emission pyrometers 27 to provide similar energy supply control as is provided in zone Z1 to give the required hose surface temperature.

The curing oven preferably has at least two zones (initial heating and master curing). It is to be understood, however, that three or more than four zones may be employed.

It will be manifest that the length of the zones and the temperature in each zone can be varied to suit operational requirements. For example, if there is more than one curing zone then there does not necessarily need to be a temperature increase in the subsequent zone or zones.

The curing aspect of the present invention resulted from much experimentation from which it was discovered that curing by short wave electric

0157956

infra-red radiation was found to be a successful method. The rapid rate of heat transfer achieved by radiation facilitates the completion of the cure within the relatively short dwell time obtainable in a continuous process. The very short emitter heat response time characteristic of short-wave infra-red radiation is suitable to provide the required degree of precise automatic temperature control in the curing oven. A thyristor system responding to the input signal from an emission pyrometer continuously monitoring the surface temperature of the hose at the critical point in its passage through the oven controls the heat output from a number of separate zones which comprise the oven. This allows a heating pattern to be maintained at the various stages of the complete curing process, to suit the curing characteristics of the rubber formulation used.

After egressing from the curing oven 26 and before being wound up on the reel 13, the cured rubber covered hose may be passed through multiple jets 28 of a dispersion of zinc stearate in water for the purpose of ensuring that adjacent coils of the hose do not stick to each other on the reel 13 and also to cool same.

The rubber-coated hose is collected on a

14.

reel arrangement, is internally de-pressurised, and thereafter laid flat and cut into appropriate lengths.

Using the curing oven and compound formulation described above, a line speed of 4 to 5 metres/minute is possible. A higher operating speed would be attainable by extending the length of the curing oven, to maintain a similar dwell-time.

The advantages arising from the above are as follows :-

(a)  Capability of producing a rubber-coated hose continuously in very long lengths, up to 1000 metres or more if necessary.

(b)  High production rate.

(c)  Improved adhesion of the rubber-coating to the textile jacket by the use of a separate pre-coat bonding agent which adhesion is considered to be as good as that of known rubber-coated hose which relies on lamination of the jacket between two rubber layers which permeate the interstices of the weave. This known process is only satisfactory so long as the correct thickness of both inner and outer rubber layers is maintained.

(d)  The use of a more closely-woven and

15.

robust textile jacket than has been employed hitherto which much reduces the risk of the hose bursting at well below designated minimum burst pressure. This again results from the use of the pre-coat bonding agent since no or little intersticial permeation by the rubber is required, i.e. the rubber is not forced through the textile jacket interstices thus weakening the jacket strength.

(e) No necessity to pinhole the rubber coating.

The oven and exhaust system controls can be of any convenient construction provided they satisfy the requirement of the process as herein disclosed and claimed.

CLAIMS:

1. A method of continuously producing rubber-covered hose, comprising the steps of extruding a rubber compound around an internally pressurised, lined textile hose jacket and thereafter curing the rubber compound by a heating process employing a plurality of adjustable, controllable and increasing temperature heating zones.

2. A method as claimed in claim 1, in which the heating process is an infra-red electric heating or a dielectric heating process.

3. A method as claimed in claim 1, in which the heating process is a hot gas heating process, a steam heating process or a fluidised bed heating process.

4. A method as claimed in claim 2, in which the infra-red heating process is a short-wave electric, infra-red radiation process.

5. A method as claimed in claim 4, in which the infra-red radiation process consists of at least four zones, the first of which serves to raise the hose temperature to a predetermined temperature above the extruder exit temperature while the subsequent zones are curing zones each at a predetermined temperature.

6. A method as claimed in claim 5, in which the second heating zone is the main or master curing zone wherein the major curing of the rubber compound commences , the third and fourth heating zones serving to **complete** the curing of the rubber compound.

7. A method as claimed in claim 5 or 6 comprising the step of controlling the curing of the rubber compound by monitoring the temperature in each zone and automatically adjusting same if and when required.

8. A method as claimed in any one of claims 1 to 7, in which the textile hose jacket is lined with rubber, thermoplastic polymer or any other conventional medium used to line hoses, and is, prior to being presented to rubber extruder, coated externally with a bonding agent and vulcanised.

9. A method as claimed in claim 8 in which a pre-heat unit is disposed between the vulcanisation stage and the rubber extruder and immediately before the rubber extruder to elevate the hose temperature to the correct extruder entry temperature should this be necessary.

10. A method as claimed in any one of claims 1 to 9 in which the rubber-coated hose is treated, if necessary, for example by a water spray (with or without zinc stearate dispersed therein) prior to being wound on a take-up reel to render the surface of the rubber coating non-stick and also to assist cooling of the hose.

11. A method as claimed in any one of claims 1 to 10 comprising the step of removing water vapour from the textile jacket and volatiles from the lining and textile jacket bonding adhesive by subjecting the lined-textile jacket, prior to the application of the bonding agent, to a heating step at a temperature sufficient to remove the water vapour and to activate the adhesive to allow the volatiles to be removed by extraction.

12. A method as claimed in claim 11 in which the textile jacket is additionally pre-dried in a controlled conditioning atmosphere prior to this heating step.

13. Apparatus for carrying out the method as claimed in claim 1 including a rubber extruder followed by a multi-zone curing oven.

14. Apparatus as claimed in claim 13, in which the oven is a short-wave electric radiation or dielectric curing oven.

15. Apparatus as claimed in claim 13 or 14 in which the temperatures of the zones are automatically controlled by a thyristor system responsive to emission phyrometers continuously monitoring the surface temperature of the hose in the oven zones.

FIG. 1

FIG. 3

FIG. 2

Z1  Z2  Z3  Z4

0157956

2/2

0157956

Application number

EP 84 30 1998

European Patent Office

**EUROPEAN SEARCH REPORT**

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | FR-A-2 353 386 (PIRELLI)<br><br>* Claims; page 1, line 37 - page 11, line 36; figures *<br>--- | 1,3,8, 9,11, 13 | B 29 C 35/02<br>B 29 C 35/10<br>B 29 D 23/22 //<br>B 29 K 21/00 |
| Y | FR-A-1 375 830 (PAGUAG)<br><br>* Abstract; page 2, column 1, paragraph 2 - page 2, column 2, paragraph 1; figures *<br>--- | 1-9,11 -15 | |
| Y | DE-A-2 532 864 (TROESTER)<br><br>* Claims; page 6, paragraph 5 - page 8, paragraph 2; figures *<br>--- | 1-9,11 -15 | |
| Y | EP-A-0 099 993 (SCHOLZ)<br><br>* Abstract; claims; page 10, last paragraph - page 12, paragraph 1; figures *<br>--- | 1-9,11 -15 | TECHNICAL FIELDS SEARCHED (Int. Cl.4)<br><br>B 29 H |
| Y | DE-A-2 851 103 (TROESTER)<br><br>* Claims; page 10, paragraph 1; figures *<br>--- | 1-9,11 -15 | |
| Y | FR-A-2 487 249 (CHODOS, NARODNI PODNIK)<br>* Claims; page 4, line 27 - page 5, line 17; figures *<br>--- | 1-9,11 -15 | |
| A | FR-A-1 080 987 (CONTINENTAL GUMMI)<br>* Abstract; page 2, paragraph 1; figures * | 1 | |

The present search report has been drawn up for all claims

| Place of search | Date of completion of the search | Examiner |
|---|---|---|
| THE HAGUE | 21-11-1984 | VANHECKE H. |

## European Patent Office

## EUROPEAN SEARCH REPORT

### DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| A | FR-A-2 403 882 (DUNLOP)<br>* Claims *<br>--- | 8 | |
| A | US-A-4 179 256 (S. TOMIOKA et al.)<br>* Abstract; column 12, lines 24-36; figure 1 *<br>--- | 10 | |
| A | GB-A-1 394 051 (RUBBER AND PLASTICS RESEARCH ASSOCIATION OF G.B.)<br>* Claims; page 2, lines 30-53 *<br>---<br><br>----- | 3 | |

TECHNICAL FIELDS
SEARCHED (Int. Cl.4)

The present search report has been drawn up for all claims

| Place of search | Date of completion of the search | Examiner |
|---|---|---|
| THE HAGUE | 21-11-1984 | VANHECKE H. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503. 03 82